# EUROPEAN PATENT APPLICATION

(11) **EP 1 619 838 A1**
(43) Date of publication of application: **25.01.2006**
(21) Application number: 04425543.8
(22) Date of filing: 21.07.2004
(51) Int. Cl.: H04L 12/56, H04L 29/06

(54) **Push to watch dedicated network element and software architecture**

(71) Applicant: Siemens Mobile Communications S.p.A., 20126 Milano (IT)
(72) Inventor: Micocci, Stefano, 40055 Castenaso (IT); Pavarani, Giovanna, 25020 Poncarale (IT)
(74) Representative: Giustini, Delio

(57) **Abstract**

3GPP IMS platform is upgraded by the introduction of a new network element NE appositely dedicated to implement Push to Watch (PTW) service via IP. It includes a Session Manager (PTW SM) interfaced to a multimedia control and duplication function (MCDF) via an internal interface Mint. Considering the interfacing of the NE to the external environment, PTW SM is interfaced to the IMS's CSCF function via Mr interface, while MCDF is interfaced to the UMTS's GGSN node through the Gi interface. In operation, PTW SM converts the incoming SIP signalling messages into corresponding session-related commands of an internal protocol conveyed by TCP on an internal interface Mint. The MCDF, besides executing commands coming from PTW SM, autonomously interacts with the participants of the PTW session by means of a floor control procedure at User Plane for scheduling the transmissions from a granted user at a time of Audio-Video contents, which are immediately duplicated to other participants. The new NE is managed by a modular software architecture including a master process (MCDFm) and as many parallel slave processes (MCDFs) as the number of running sessions. Each slave being in its turn split into three subcomponent processes: a first one dedicated to execute the master commands aimed to: create, update, or delete sessions; a second one dedicated to manage the RTCP floor control signalling, and a third one dedicated to the duplication of RTP data of the multimedia payload. Both RTP and RTCP are conveyed by UDP (fig.14).

## Description

### FIELD OF THE INVENTION

The present invention relates to the field of the Push services on IP network accessed through wireless networks, and more precisely to a Push to Watch dedicated network element and the respective software architecture to upgrade the 3GPP IMS platform.

### BACKGROUND ART

Nowadays operators and service providers of the two widely spread communication infrastructures, respectively based on IP and wireless networks, press for a large integration of the two typologies of services. IP offers a number of attractions over traditional telecommunications protocols: in addition to representing a bridge between the telecommunications and Internet worlds, it also offers a "seamless" of communication over many different types of networks. This facilitates a wide diversity of communications scenarios, including various combinations of fixed and mobile, wired and wireless networks, the specific characteristics of which are of no interest to customers. As a result, customers will experience extremely flexible telecommunications, irrespective of the various networks over which their calls may pass. To help the understanding of the description, a list of used acronyms and bibliographic references are given in at the end of the description.

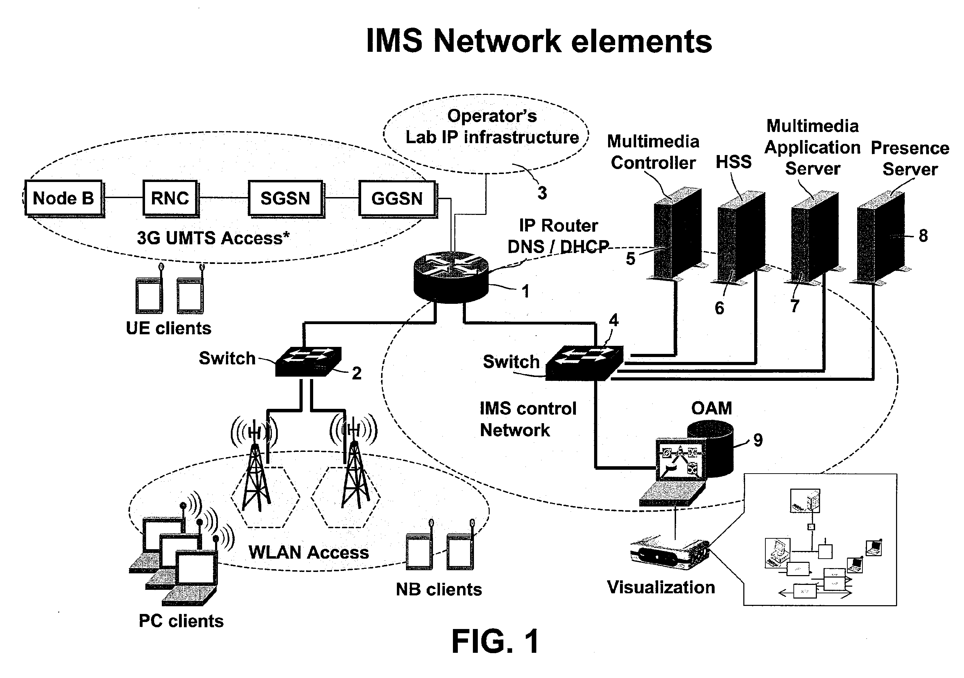

Fig.1 shows the integration of an IMS control network with two different wireless networks, namely: 3G (third generation) UMTS accessed by UE clients, and WLAN accessed by PC and NB clients. The system architecture depicted in fig.1 is derivable from 3GPP TSs, also considering the consolidated IETF RFCs. With reference to fig.1, the UMTS access part includes the cascade of known functional blocks named: Node B, RNC, SGSN, and GGSN, as described in the relevant 3GPP Technical Specifications. An IP router 1 operating at level 3 (Network) of the OSI protocol is provided to connect the two wireless access to the IMS part. The IP router has a first connection to the GGSN block, a second connection to a first switch 2 collecting traffic of the WLAN, a third connection to the Operator's Lab IP infrastructure 3, and a fourth connection to a second switch 4 inside the IMS control network. This second switch interconnects the IP Router 1 to the following apparatuses: Multimedia Controller 5, HSS (Home Subscriber Server) 6, Multimedia Application Server 7, Presence Server 8, and OAM 9; the functionality of these apparatuses will be explained later on. The IP router 1 needs of DNS / DHCP capability.

The IMS platform offers to the operators, service providers, and clients, the sort of service capabilities that IP is designed to provide. These include access to Internet and multimedia content. IMS will use the emerging IP version 6 (IPv6), considered by many to be substantially superior to the current, widely deployed version 4 (IPv4). The use of IMS in 3G systems will be optional, but is expected to be seen by operators as an attractive choice for enhancing 3G packet mode operation. The IM subsystem has as its primary focus to provide the users/clients the ability to join multimedia session in which they are allowed to send and receive voice and data communications, even when roaming. At this purpose SIP is an application-layer control (signalling) protocol for creating, modifying and terminating sessions with one or more participants. These sessions include Internet multimedia conferences, Internet telephone calls, presence service and multimedia distribution. SIP supports user mobility by proxying and redirecting requests to the user's current location. The IMS platform uses the SIP protocol for the establishment of sessions and the service provisioning on mobile networks. For more details see **[RFC3261]** at the end. For the same purpose **[3GPP_ServReq]** identifies the necessary requirements from the user point of view. According to this specification, the IM subsystem should provide the following capabilities:
- Access control: the IMS must be able to verify at any time if the user is allowed to use the resources of IMS.
- Capability negotiation: the IP multimedia applications must have the possibility to identify and select the available media components and the QoS of the sessions. The IM subsystem must allow such negotiations to be started from any party (user, operator, or the application itself on behalf of them) and at any time (at the session invocation, during the acceptance or during the session).
- Redirecting of multimedia session: the IM subsystem must allow the identification of an alternative destination for an IP multimedia session or individual media of an individual session. Similarly to the capability negotiations, the IM subsystem must allow such redirection to be started from any party (the receiving party, the sending party or the network entities on behalf of them), at any time (prior the set up of the session, during the initial request, during the establishment or during the ongoing session).
- Invoking an IP multimedia session: the user must be able to invoke one or more IP multimedia sessions and to activate concurrent applications inside each multimedia session. At this purpose the identification of the entities will be allowed through the use of both telecom and Internet numbering, depending on the ability of the originating party.
- Handling an incoming session: the terminating entity must be able to identify the session originator, to negotiate the capabilities interacting with the user profile and to decide if accept or reject the session. In particular it must be possible to accept only a subset of the offered media.
- Handling of an ongoing session: the user, as said before, must be able to decide about the addition or the deletion of media components of IP multimedia applications during a session. Moreover it must be possible for the user to suspend and resume at a later time a multimedia session.
- Ending a session: the user must be able to end an ongoing session at any time.
- Local Services: the users must be able to access, while roaming outside the home environment, services of local nature offered by the visited network.

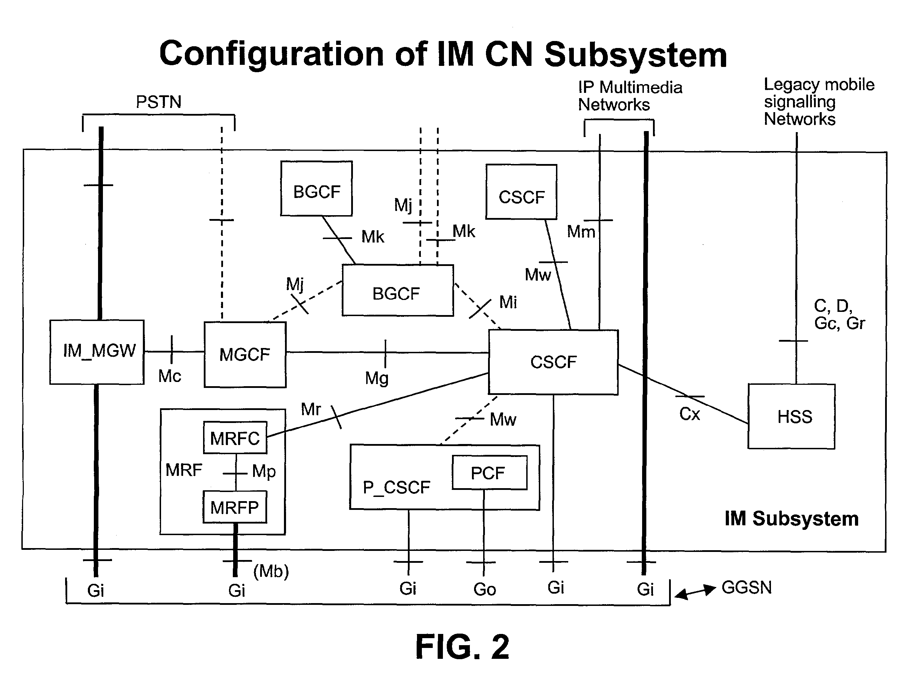

**Fig.2** shows the configuration of the IMS functional block from 3GPP vision. In the figure, thick lines indicate interfaces supporting user traffic, while dashed lines interfaces supporting only signaling. The reference architecture for IMS subsystem can be found in **[3GPP_NetArch].** A more exhaustive description of the involved entities can be found in **[3GPP_IMS].** The IM subsystem constitutes a part of the Release 5 Core Network infrastructure of PLMN, which is divided into a CS domain, a PS domain and an IM subsystem. The configuration of **fig.2** is a "Logical Model" introduced by 3GPP to define an abstract view of a network by means of information objects representing network elements, aggregations of network elements, the topological relationship between the elements, endpoints of connections (termination points), and transport entities (such as connections) that transport information between two or more termination points. The information objects defined in the Logical Model are used, among others, by connection management functions. In this way a physical implementation independent management is achieved. A Network Element is defined as a discrete telecommunications entity which can be managed over a specific interface.

With reference to **fig.2**, the IMS representation includes the following functional blocks: IM_MGW, MGCF, CSCF, P_CSCF, PCF, BGCF, MRF, HSS. The following reference points (interfaces): Mb, Mc, Mg, Mr, Mw, Mi, Mj, Mk, Mm, Cx, C, D, Gi, Go, Gc, and Gr are specified between the various blocks, as indicated in the figure. In operation, the IM subsystem refers to the set of CN entities using the service provided by the PS domain to offer multimedia services. The CSCF element can act in the following three ways: P-CSCF, I-CSCF, S-CSCF (Presence-CSCF, Interrogating-CSCF, Serving-CSCF); the P-CSCF has been indicated separately in the figure. The P-CSCF is the first point of contact for an end-user device when the IMS is contacted from inside the same administrative domain as the IMS. The main tasks of P-CSCF are:
- forward SIP messages;
- translate IDs other than SIP URI into SIP URIs;
- maintain a security association between itself and each UE.
The I-CSCF is the first contact point, when the IMS is contacted by an IMS of another administrative domain. The main tasks of I-CSCF are:
- forward SIP messages;
- obtain from the HSS the address of the S-CSCF;
- conceal the internal network configuration, capacity, and topology.
The serving S-CSCF performs session control and service triggering. The main tasks of S-CSCF are:
- act as registrar (a server that accepts register requests);
- forward SIP messages;
- interact with the application server;
- authenticate according to HSS/UMTS data;
- supports a proprietary authentication mechanism based on AKA;
- generate CDR.
The HSS is a database which contains IMS subscriber-related information. This database includes data for:
- Identification;
- authorized services;
- subscribed services.
The IM-MGW performs controls over bearers: it may terminate bearer channels from a CS network or media streams from a packet network (RTP streams in an IP network), performs media conversion (optional), process the payload (e.g. codec, echo canceller, conference bridge) and interworks with MGCF for the resource control.
The MGCF selects and communicates with appropriate CSCFs in order to control the part of the call state that belongs to connection control for media channels in an IM-MGW. It also communicates with IM-MGW (out of band signalling) and performs protocol conversion between ISUP (ISDN User Part) and the protocols of IM subsystem.
The MRF (Multimedia Resource Function) is split in two entities called MRF Controller (MRFC) and MRF Processor (MRFP) with a Mp reference point between them. The following tasks have been identified by 3GPP for these two blocks, MRFC:
- controls the media stream resources in the MRFP;
- interprets information coming from an Application Server (AS) and S-CSCF (e.g., session identifier) and controls MRFP accordingly;
- generates CDRs.
SIP is the standard protocol for the Mr interface between S-CSCF and MRFC.
The MRFP:
- controls bearers on the Mb reference point;
- provides resources to be controlled by the MRFC;
- mixes incoming media streams (e.g., for multiple parties);
- sources media streams (for multimedia announcements);
- processes media streams (e.g., audio transcoding, media analysis);
- duplicates data packets.

The BGCF block selects the network in which PSTN breakout is to occur. If it determines that the breakout is to occur in the same network in which the BGCF is located within, then the BGCF shall select a MGCF which will be responsible for the interworking with the PSTN. Otherwise the BGCF will forward this session signaling to another BGCF or an MGCF. Moreover the BGCF can generate CDRs.

The network elements identified in **fig.2** are mapped into the various servers and apparatuses of the IMS Control Network of **fig.1.** Turning the attention back to **fig.1,** the Multimedia Controller 5 is a key element of the IMS control network which is responsible for call signalling; all three functional blocks P-CSCF, I-CSCF, S-CSCF are realized in it in a modular way. The HSS apparatus 6 makes available the homonym database of **fig.2.** The Multimedia Application Server 7 is a SIP application server connected via SIP to the Multimedia Controller 5 and is able to offer three APIs:
- Java programming language (JPL) API;
- Call processing language (CPL) API;
- Hypertext transport protocol (HTTP) API.
Besides, the MRF functionalities are largely realized in the Multimedia Application Server 7.
The Presence Server 8 supports the Presence Service. The presence service provides a means to supervise the presence information of subscribers. A subscriber's presence information can be conceived as a data set containing various information elements related to his/her current communication state. Presence information can be, e.g.:
- whether a user is reachable or not at the moment,
- by which communication medium the user is reachable (e.g., voice, video, chat, instant messages),
- a short message which is to be sent when the subscriber changes his presence settings (e.g.: "Not reachable at the moment, please send instant message").
Presence data enables enhanced user services and applications, such as:
- buddy list (a display with presence information concerning a subscriber's friends", who have also subscribed to this service;
- detailed presence settings for each type of SIP session and/or media stream.

### APPROACH TO THE TECHNICAL PROBLEM

The invention deals with a specific service called by the inventors Push To Watch (PTW) in analogy with known Push To Talk (PTT). According to PTW service, an user at a time gets the permission to sends a real-time source stream simultaneously to a group of other selected users by means of its cellular handyphone (2,5G, 3G technology). The term "push" means any facility put at the disposition of the user on his handyphone to this aim, e.g.: a button, a selectable icon, a voice command, etc.. Once the sending is completed the release of the push button, or the like, alerts the network. PTW deals with multimedia streams of data packets representing, e.g.: moving pictures and associated audio like a short film; static images like photographies optionally associated to a spoken comment or to high-fidelity sound. The UE clients participating to the PTW session shall comply with the same standard codes, e.g.: MPEG-4 for moving picture and AMR for the associated voice comment, JPEG for static images, MPEG-3 for high-fidelity sound, etc.

Push To Watch is not yet a commercial service. The current specification on push streaming services mainly concerns Push To Talk (PTT). UEs which support PTT operate in compliance with the SIP protocol and have the capability of generating and processing floor-related signalling. Two working group are active at this purpose: 3GPP and OMA. 3GPP has not addressed yet how PTT-like services (e.g. PTW) can be provided by 3GPP compliant networks. As reported in **[3GPP_IMS],** a Multimedia Resource Function (MRF) can be understood as one of the key enabling functionality of the IMS platform. As already said, 3GPP defines two network elements under MRF name, one called MRFP is placed on User plane and the other called MRFC is placed on the Control plane, the two network elements are interfaced at a reference point Mb. MRF interacts with the SIP elements of IMS (P/I/S CSCF) using the SIP protocol stack. The MRFP is charged with several tasks and one of them is control and duplication of media at reference point Mb on connection Gi. The MRF, as specified from 3GPP, is a rather complex element because has to implement a lot of functions. The functionality provided by the MRF is crucial when PTT-like service needs to have more than two users belonging to the same session with the necessity to duplicate real-time flow contents. In other words, a detailed specification doesn't exist yet.

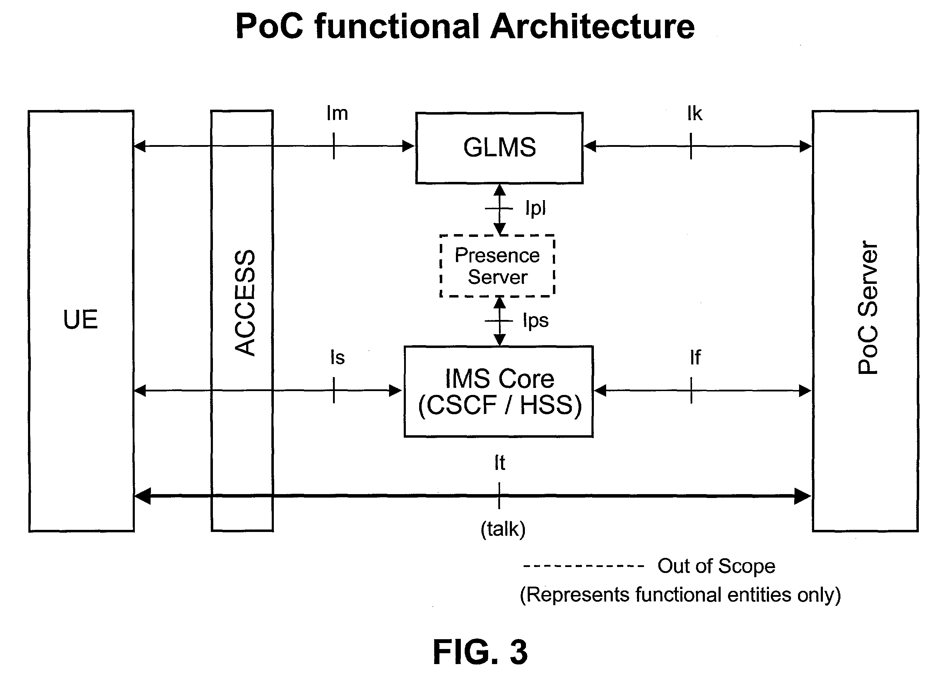

At the other side, OMA identifies a family of services called Push To Talk over Cellular (PoC), that implements the capabilities for the control and duplication of the media (PoC User Plane). The OMA approach is rather different from the 3GPP approach, but it is just started and a convergence in the future is foreseen. OMA approach aims to define the PoC Server in terms of functional entities without mapping them to IMS functional entities identified by 3GPP. The PoC functional architecture is outlined in **fig.3** reproduced from **[PoC_Arch]**, it includes the following blocks: UE, ACCESS, GLMS, Presence Server (out of scope), IMS Core (CSCF / HSS), and PoC Server; interconnected as indicated in the figure by means of the following interfaces: lm, lk, lpl, lps, ls, lf, and It. In the current PoC release only interfaces between the User Equipment and the Network are specified, i.e. the signalling is defined between the user and the IMS Core (CSCF/HSS) and the user plane is specified between the User Equipment and the PoC Server. The definition of the interface between IMS Core and the PoC Server is out of the scope. This approach can be derived from **[PoC_User]** that specifies the User Plane functions of the PoC service. The Signaling Plane procedures (i.e., the control procedures based on SIP protocol) are defined in **[PoC_Sign].** The document is still in progress, so different aspects, especially on the flow control management, are under discussion, but it is clear from [PoC_User] that the MRF tasks are specified on application level and that no splitting between MRFC and MRFP functions are considered.

In conclusion, PTW approach is not yet specified by OMA and 3GPP and the proposed approaches for the only PTT service are different between the two organizations and not easily and immediately applicable to PTW.

### OBJECTS OF THE INVENTION

The main object of the present invention is that to offer a Push to Watch service via 3GPP IMS to registered users of a packet switched mobile radio system.

Another object of the invention is that to propose a PTW service able to overcome the limitations of the IMS-MRF functionality as far as floor control and duplication of real-time streams are concerned.

Another object of the invention is that to propose a modular and reliable PTW software architecture suitable for the IMS platform.

### SUMMARY AND ADVANTAGES OF THE INVENTION

The invention achieves said object by providing a network element appositely dedicated to implement Push to Watch (PTW) service via IP, as disclosed in the device claims. The claimed network element shares the reference points Mr and Gi as the MRF element of the IMS platform **[3GPP_IMS].** PTW service is offered to the users of a 3GPP packet switched mobile radio network which are registered to IMS and participate to a PTW session. The operation of the new network element takes advantage both from IP and Transport protocols. It includes a conversion module from SIP to an internal protocol and a media control and duplication part, called hereinafter MCDF. The latter is controlled by the internal protocol to update the sessions to which exert floor control and multimedia (audio-video) real-time packet data duplication. As a consequence, the new network element can works in parallel to the MRF element or alternatively can be obtained from a specific design of the MRFP and MRFC MRF's components. Physical layer is charged with multiplexing/demultiplexing of signalling/data packets of each participant a PTW session, both at the Mr interface at Control Plane and the Gi interface at User plane. The PTW-dedicated network element can be implemented either by a single processor or a multiprocessor architecture including master and slave microprocessors.

In order to be in line with the future standardization choices, OMA approach has been mainly followed in the definition of the MCDF part maintaining the basic architecture indications coming from 3GPP. In particular:
- MCDF is a different entity from the entity that manages the SIP session, see [3GPP_NetArch];
- MCDF has been specified following [Poc_User];
- MCDF implements:
   ○ Floor Control;
   ○ Audio/Video packets duplication;
   ○ Flow Control (presently not implemented).
MCDF could be partially mapped onto 3GPP and OMA perspective in this way:
- 3GPP perspective:
   ○Floor Control could be mapped in MRFC;
   ○ Audio/Video packets duplication could be mapped in MRFP;
   ○ Flow Control could be mapped both in MRFC and MRFP.
- OMA perspective:
   ○ Floor Control could be mapped in User Plane;
   ○ AudioNideo packets duplication could be mapped in User Plane;
   ○ Flow Control could be mapped in User Plane (not yet well defined from PoC specification).

Other object of the invention is a software architecture comprising a plurality of processes running on processing means belonging to the aforementioned PTW dedicated network element The software architecture includes:
- a conversion process from SIP to an internal protocol aimed to create or update the PTW sessions according to the incoming SIP message contents;
- a master process prompted by the internal protocol to set up a number of parallel slave processes equal to the number of PTW sessions simultaneously initiated, assigning for each session the needed resources and indicating the input and output ports requested by the transport protocols used to convey signalling and data from/to the participants the session.
- each slave process acting upon said internal protocol to update the session to which exert floor control and duplication of multimedia real-time packet data, such as audio-video, transmitted in turn by the granted participant.
Advantageously, the slave processes are designed to be modular, each one being split into three subcomponent processes:
- a first one being dedicated to execute commands embedded into the messages of said internal protocol;
- a second one being dedicated to manage floor-related signalling from/to the participant of the updated session in order to grant the transmission from one participant at a time;
- a third one being dedicated to duplicate the multimedia stream transmitted by the granted participant to the other participants the session.
Without limitation:
- TCP protocol **[RFC0793]** is used at the two ends of the internal interface.
- RTP protocol **[RFC3550]** is used to convey the pushed contents.
- RTCP protocol **[RFC3550]** is used to convey the floor related signalling.
- UDP protocol **[RFC0768]** is used to convey the RTP/RTCP packets.

The proposed software architecture:
- simplifies the code and improves performances because every process manages only one session;
- simplifies the code and improves performances because it is the Operating System kernel of the master that takes care of process scheduling and resource allocation;
- in case of multiprocessor machine the various processes can be assigned to different CPUs by the kernel itself;
- it is highly scalable.

The software implementation is really in line with the standardization process and it is more flexible respect to it. In fact, although only the capabilities needed by the Push To Watch services are implemented, thanks to the modular software architecture other functional extension is still possible. A prototype software architecture for MCDF has been developed in C language in a Linux environment to obtain high performance.

With the introduction of the MCDF network element the following advantages are obtained:
- To have a functional module independent from the particular IMS platform release, because it is implemented on a host not belonging to the IMS and it doesn't interact directly with CSCF.
- To have a functional module independent from the technology used for the application development because the communication with IMS is based on an internal protocol on top of TCP.
- To have an implementation in line with the standardization process with a well tuned subset of functions needed to support Push To Watch services.
- To have an implementation with high performances because running on a dedicated host.
- To have an implementation highly scalable thanks to the particular software architecture.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1**, already described, depicts the main network elements of a complex scenario comprising an UMTS and a WLAN access to an IP Multimedia Subsystem (IMS) control network;
- **fig.2,** already described, shows the functional configuration of the IMS according to **[3GPP_NetArch],** (see the References at the end of the description), which the control network of the preceding figure is derived from;
- **fig.3,** already described, shows the high level functional architecture for delivering Push-to-Talk over Cellular service according to **[PoC_Arch];**
- **fig.4** shows the high level functional architecture or the Push To Watch (PTW) service offered by the present invention;
- **fig.5,** already described, lists the functionalities embodied in a new IMS network element named Media Control and Duplication Function (MCDF) introduced by the present invention;
- **fig.6** to **9** show some diagrammatical representations of the interactions between the new MCDF block and other main functional blocks of the IMS Control Network of fig.1 involved with PTW service;
- **figures 10 to 13** show the message sequence charts describing the operation of a block "Floor control functionality" inside MCDF;
- **fig.14** shows a diagrammatic representation of the software architecture for implementing the PTW service.

### DETAILED DESCRIPTION OF SOME PREFERRED EMBODIMENTS OF THE INVENTION

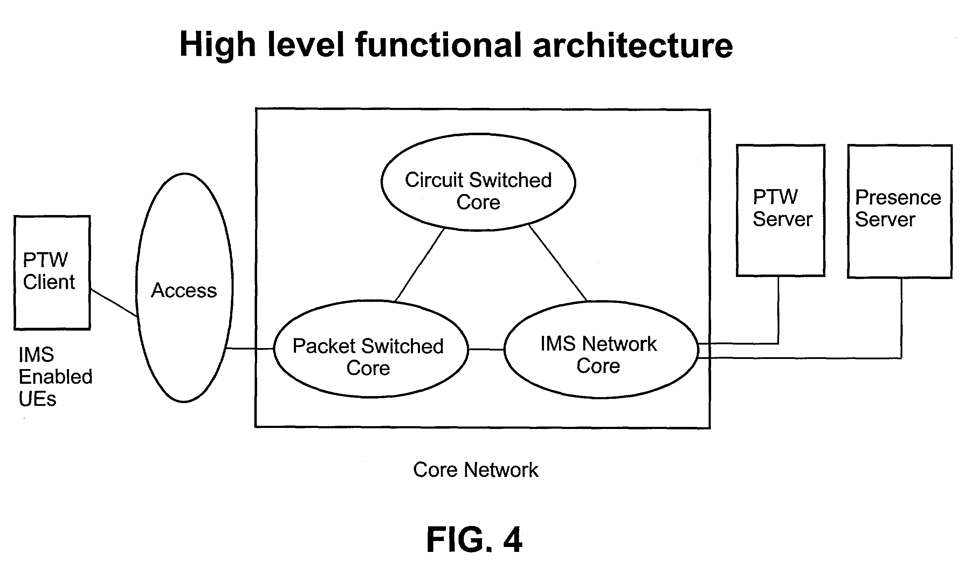

**Fig.4** outlines a reference high level functional architecture for implementing the PTW service. With reference to **fig.4,** the architecture includes the following functional blocks: PTW Client, Access, Core Network, PTW Server, and Presence Server. The Core Network includes in its turn three interconnected functional blocks: Circuit Switched Core, Packet Switched Core, and IMS Network Core. The PTW Client block is functionally connected to the Packet Switched Core trough the Access block. The IMS Network Core is connected to the Packet Switched Core, at one side, and to the PTW Server and Presence Server at the other side. In this way the IMS Network Core has the full control and visibility of the information relevant to the PTW Client which is an IMS Enabled Terminal. With the exception of Circuit Switched Core, the other blocks of **fig.4** are easily mapped into the elements of **fig.1,** in particular the PTW Server could be considered as an upgrade of the Multimedia Application Server 7. In operation, the main feature, which characterizes the Push To Watch service, consists on transmitting a data stream, via IP, from a multimedia (video and audio) mobile terminal to another mobile terminal. In this way, an user accessing the service could ask to receive the audio-video content or decide to send the data stream to another mobile terminal, acting as a multimedia source. Audio/video contents are directly streamed from the source to the user(s) without any kind of store and forward mechanism. The sender selects one or more users to contact, then, starts streaming the video content by pushing a button on his terminal. More than two partners can be involved in the same session (many-to-many). During the Push To Watch session, every participants take the permission to transmit and he can add a new user to the session. In a certain moment one of them will have the permission (GRANT) to transmit, the others will be receive the same data stream.

The Use Case description will be inspired to the following schema. The *Actors* that work in a particular context *(Precondition)* act to obtain the *Goal* by means of all the described steps *(Actions).* At the end of the action the system will be in a new state (*Postcondition*)*.* Any kind of errors or abnormal situation will be described in the *Exception.*
*ACTOR:* An actor is a role that a user plays in the system.
*GOAL:* What is the purpose for this Use Case.
*PRECONDITION:* The condition that will be verified for the Use Case described.
*ACTION:* It is a textual description of the steps required and any alternative actions at each step.
*POSTCONDITION:* The effect of the Use Case on the other elements of the service.
*EXCEPTION:* All the cases that don't permit to complete the Use Cases steps.
The main PTW service use cases are:
- Session establishment (one to one, many to many);
- Add a new user;
- Leaving session

### PTW SESSION ESTABLISHMENT (one-to-one)

*ACTORS:* User A, User B
*GOAL:* Open a PTW session with a user present in the buddy list.
*PRECONDITIONS:* User A and User B are provisioned and registered to the IMS. The buddy list client of User A is running. The UMTS connection is available.
*ACTIONS:*
1. User A selects User B from the buddy list;
2. User A pushes the PTW Button the PTW screen pops up;
3. A courtesy message (or a graphical method) indicates to User A that User B is being contacted;
4. User B is asked to accept or reject the session;
5. User B accepts the session;
6. User B PTW client is started.

*POSTCONDITIONS:* The session is established. The images being captured by the camera are shown in the *preview*/*show* part of both clients on the respective phones.
*EXCEPTIONS:* The system is down: the user will be automatically logoff by the system. User B(A) is no longer available: a failure reason message informs User A(B). User B rejects the incoming PTW session: the MIM session will not start and a failure reason message informs User A.

### PTW SESSION ESTABLISHMENT (many-to-many)

*ACTORS:* User A, User B, User C.
*GOAL:* Open a MIM session with two users present in the buddy list.
*PRECONDITIONS:* User A, User B and User C are provisioned and registered. The buddy list client of User A is running. The UMTS connection is available.
*ACTIONS:*
1. User A selects User B and User C from the buddy list;
2. User A pushes the PTW Button the PTW screen pops up;
3. A courtesy message (or a graphical method) indicates to User A that User B and User C are being contacted;
4. User B is asked to accept or reject the session;
5. User
   C is asked to accept or reject the session;
6. User B accepts the session;
7. User C accepts the session;
8. User B and User C PTW clients are started.
*POSTCONDITIONS:* The session is established. The images being captured by the camera are shown in the *preview*/*show* part of clients on the respective phones.
*EXCEPTIONS:* The system is down: the user will be automatically logoff by the system. A User is no longer available: a failure reason message informs the remaining Users. User B(C) rejects the incoming PTW session: the PTE session will start with the remaining User and a failure reason message informs User A.
ADD A USER TO A PTW SESSION
*ACTORS:* User A, User B, User C.
*GOAL:* Add a user to a session. A session is established between User A and User B. User C is provisioned and registered
*ACTIONS:*
1. User A selects the Add soft button in the *status*/*command* part of the PTW client;
2. User A selects User C from the buddy list;
3. A courtesy message (or a graphical method) indicates to User A that User C is being contacted;
4. User C is asked to accept or reject the session;
5. User C accepts the session;
6. User C client starts.
*POSTCONDITIONS:* A three party session is established. The images being captured by the camera are shown in the *preview*/*show* part of all clients on the respective phones.
*EXCEPTIONS:* The system is down: the user will be automatically logoff by the system. User A, B or C is no longer available: a failure reason message informs the other users. User C rejects the incoming PTW session: User C will not be added to the MIM session and a failure reason message informs User A and User B.
PTW SESSION LEAVING
*ACTORS:* User A.
*GOAL:* User A leaves a PTW session.
*PRECONDITIONS:* User A established a MIM session with one or more users.
*ACTIONS:*
1. User A presses the "End Session" button on the *status*/*command* part of the client.
2. The other users belonging to the session will be notified that User A left the session.
3. If there was only one users (other than User A) in the session, the session is torn down.

*POSTCONDITIONS:* User A PTW client is shut down.
*EXCEPTIONS:* The system is down: the user will be automatically logoff by the system. User A UMTS connectivity is lost: other users will be notified after a time-out.

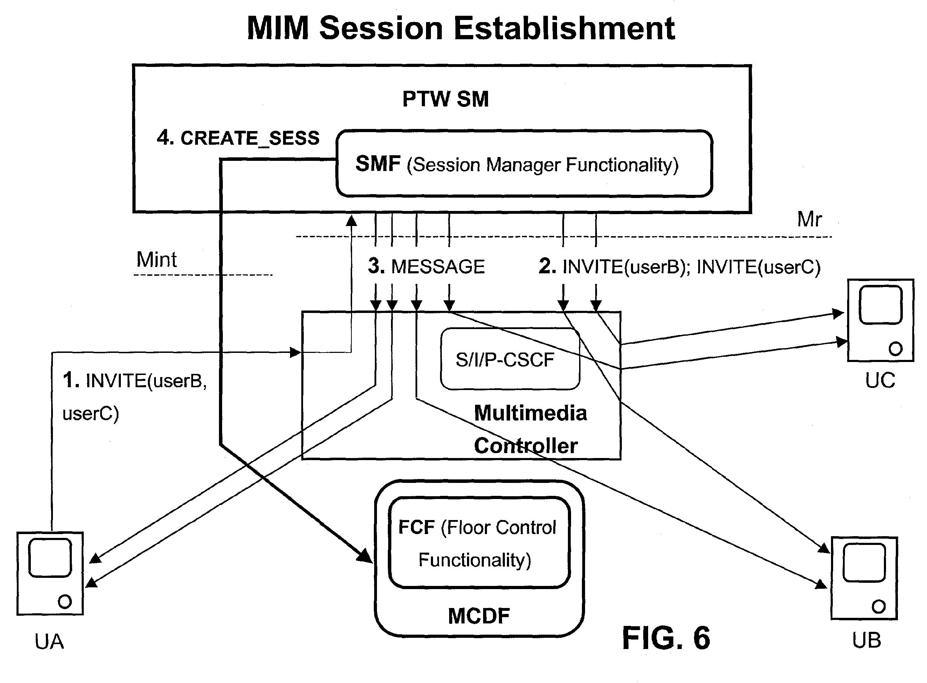

**Figures 6** to **9** show some diagrammatical representations of the interactions between the main functional blocks involved with PTW service from the creation to the deletion of a single session. The same description is valid for more sections. The represented entities are the following: UA, UB, UC, UD clients, PTW Session Manager (PTW SM), MCDF, and Multimedia Controller (label 5 in fig.1). In their turn: Multimedia Controller includes a S/I/P-CSCF block, PTW SM includes a SMF block, and MCDF includes two functional blocks FCF and AVD. The PTW SM might be included in the Multimedia Application Server (label 7 in fig.1) to act as SIP signalling intermediary between originating and terminating users of the PTW service. For this aim the PTW SM block includes a Session Manager Functionality, embedded in the SMF block, which converts the incoming SIP signalling messages into corresponding commands of an internal protocol directed to an input port of the MCDF part, to be used herein. The Multimedia Controller supplies the PTW SM block with S/I/P-CSCF functionalities of the homonym block for the correct routing of the user signalling/data through the IP network. The MCDF block, after the execution of session related commands (creates/updates/deletes) coming from PTW SM, autonomously interacts with the PTW participants at User plane through a floor control procedure embedded into the FCF block. The aim of the floor control procedure is that of scheduling the transmission among all the participants a PTW session, so that block AVD correctly performs Audio-Video Duplication and sending. From the implementation point of view also the MCDF block might be included in the Multimedia Application Server (label 7 in fig.1), as independent block or as an upgrade of the MRFC and MFRP sub-elements belonging to the MRF network element (fig.2). With further reference to **fig.2,** the involved interfaces are indicated in the figures: Mr interface is indicated between Multimedia Controller and PTW SM, an internal interface Mint is indicated between PTW SM and MCDF, and the Gi interface is indicated between MCDF and UA, UB, UC, UD clients.

In **fig.6,** the main interactions performed during a "MIM Session Establishment" phase are shown. With reference to **fig.6,** User A contacts PTW SM to start a session, sending a SIP INVITE message **1** to the PTW SM. The PTW SM acts as a back to back user agent and sends a SIP INVITE message **2** to the invited users through the Multimedia Controller, one SIP INVITE message for each invited user. For the sake of simplicity the ACK messages from the invited users to PTW SM are neither shown in **fig.6** nor in the successive figures. The inviter user receives back a SIP MESSAGE 3 with the response (invite accepted or declined) from the invited users (one for each invited user). If more than one participant has been invited, a SIP MESSAGE 3 is also sent to each of them to inform about the identity of the other participants of the session. Now, the session has been placed and the PTW SM block has to pass some parameters to the MCDF in order to manage properly the duplication of the data and the FLOOR management. For this purpose, the SMF block sends a new CREATE_SESS message (MESSAGE **4)** to the MCDF. The details of message format are illustrated in **APPENDIX B.**

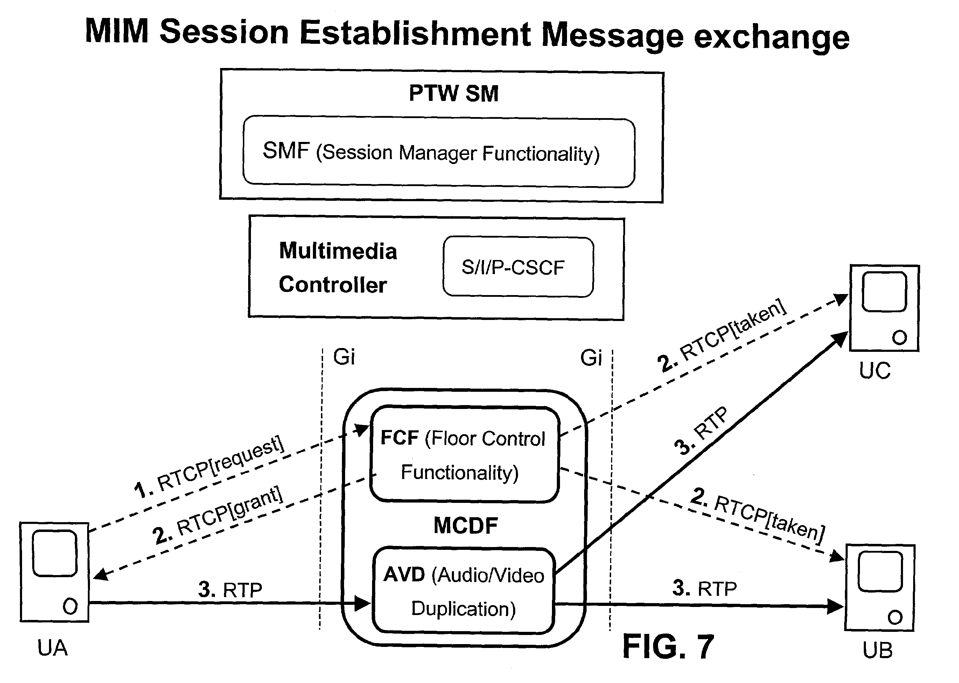

In **fig.7,** the main interactions performed during a "MIM Session Establishment Message Exchange" phase are shown. In this phase a "Floor Control" procedure is implemented both on the terminal(s) and the MCDF. This procedure is implemented to correctly implement the "Audio/Video Duplication". With reference to **fig.7,** the session has been already established, then the user (e.g. User A) can send audio/video contents to the other participants. For this reason, User A requires the permission to transmit sending a RTCP[request] packet 1 to the MCDF. The MCDF a checks if no other requests are pending, then it sends an RTCP[grant] packet **2** to User A to inform that he has obtained the floor control and a RTCP[taken] packet **2** to each of the other participants of the session to inform that the floor control has been assigned. Now User A can send audio/video contents that will be duplicated by the MCDF and relied to the other users by means of the RTP protocol **3.** More details on the floor control mechanisms are provided in following of the description and in **Appendix A.**

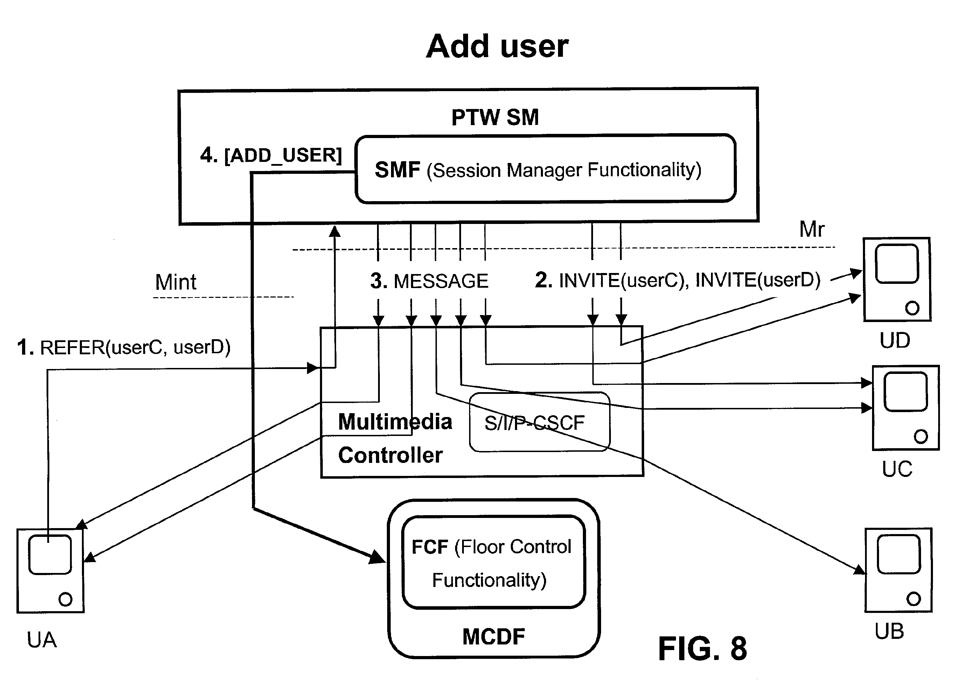

In **fig.8,** the main interactions performed during an "Add User" phase are shown. This procedure allows a user to add new parties to an existing established PTW session. With reference to **fig.8,** User A and User B are already belonging to the same session. User A sends a SIP REFER message 1 to the PTW SM with the SIP user identifier of user C and user D. Thus, the PTW SM sends a SIP INVITE message **2** to the selected users through the Multimedia Controller. The PTW SM sends a SIP MESSAGE **3** to each terminal in order to inform everybody that new users have been added in the session. Finally the PTW SM interacts with the MCDF part and its SMF block sends a SIP new ADD_USER message **4** informing that one of more users have been added to the session and are ready to transmit or receive audio/video real time contents. The details of message format are illustrated in **APPENDIX B.** This procedure allows a user to add new parties to an existing established one-to-one or many-to-many PTW session.

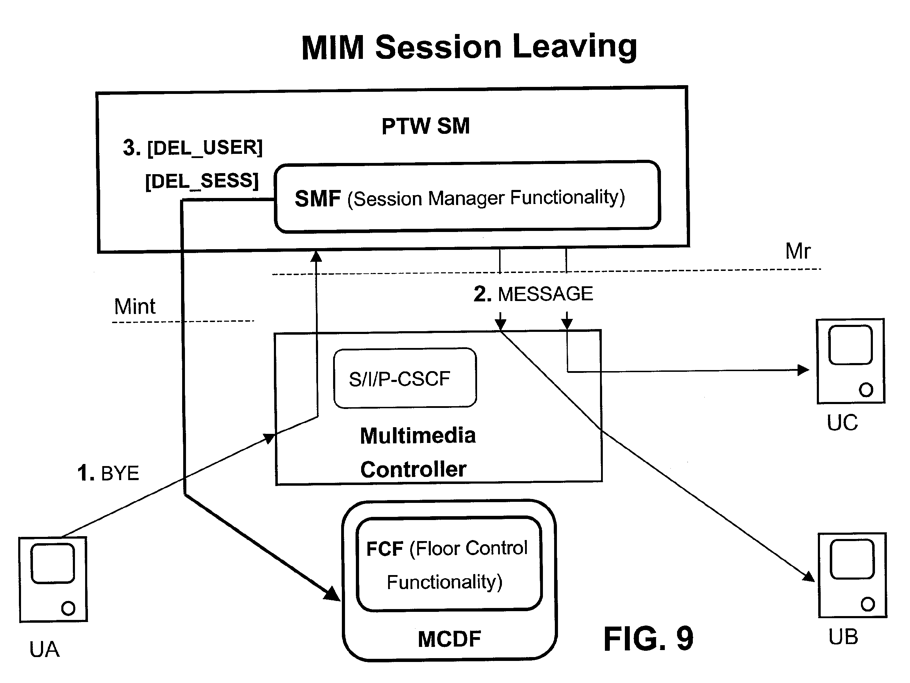

In **fig.9,** the main interactions performed during an "Session Leaving" phase are shown. With reference to **fig.9,** user A wants leave the session, then he contacts PTW SM sending a SIP BYE message **1.** The other users will be notified by a SIP MESSAGE **2** that user A left the session. When user A leaves the session the other users remain connected. The PTW SM informs the MCDF part that user A is leaving and the SMF block sends a new DEL_USER message **3.** The session is closed if only one user remains in the session. In this case, SMF will send to the MCDF a new DEL_SESS message **3** also. The details of message format are illustrated in **APPENDIX B.**

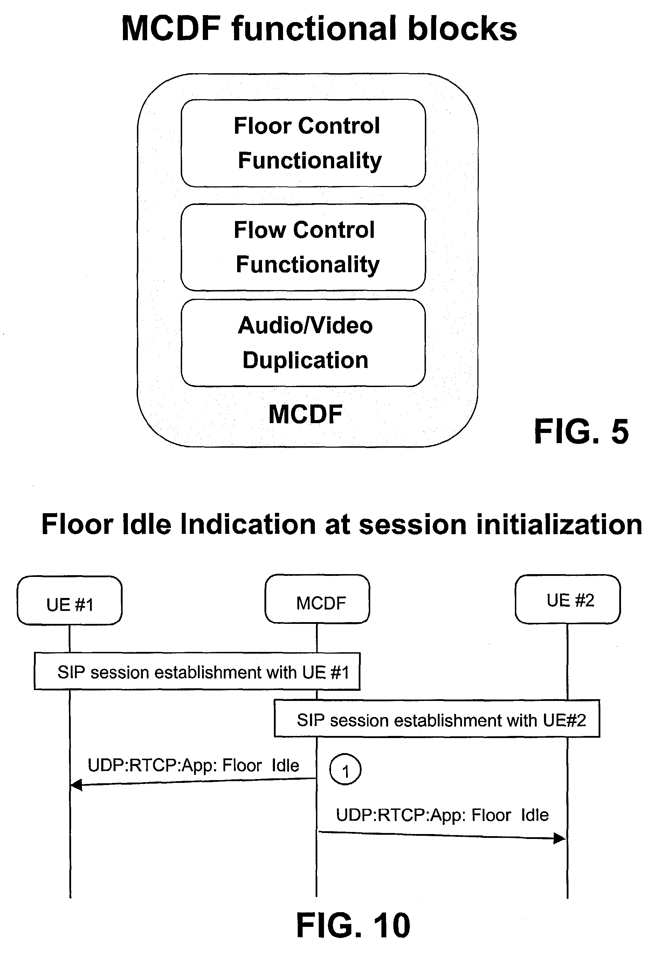

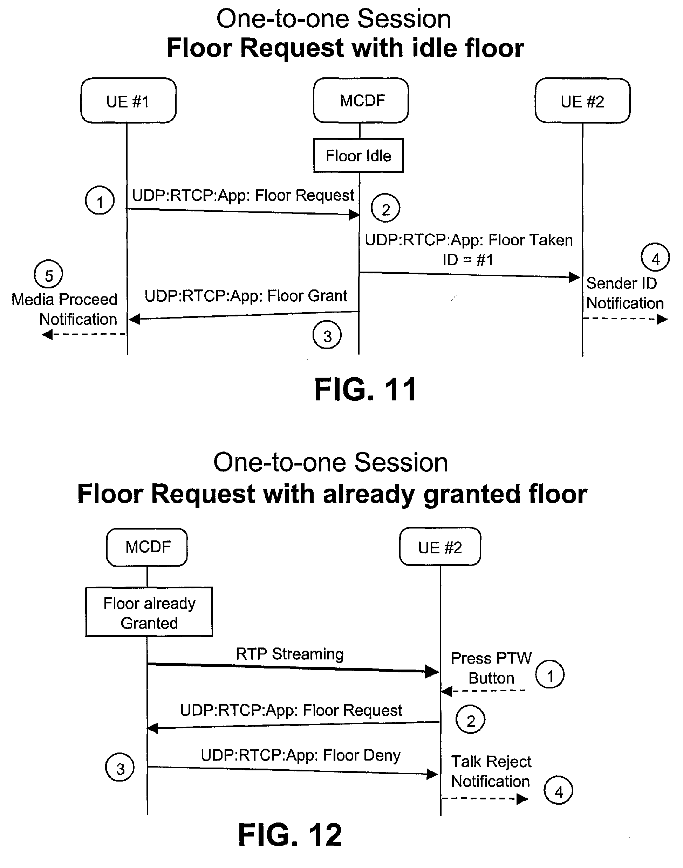

Now, with reference to the **figures 10** to **13,** the operation of block "Floor control functionality" inside the MCDF part (fig.5) is described. This functionality is implemented during the "MIM Session Establishment Message exchange" phase of **fig.7.** The Floor control functionality has to be implemented both on the terminal and in the network. The main task of this Floor Control functional block is to manage the direction of the data flow. The owner of the floor can send audio/video to the other participants of the session. If the owner of the floor releases the control of the data flow, one of the other participants can require the control of the floor and, if granted, transmit audio/video to the other participants. This means that the floor control mechanism allows only one user to send a media stream at any given time. This procedure prevents users from transmitting media at the same time. RTCP APP packets are used for floor control. The floor control contains the following procedures:
- Floor Request - This provides the terminal with a procedure for requesting the permission to transmit media to other participants in the session.
- Floor Grant - This procedure is used by the network to inform the terminal that has obtained the floor requested.
- Floor Release - This provides the terminal with a procedure for releasing the granted floor to other users in the session.
- Floor Idle Indication - This procedure is used by the network to inform participants that the floor is idle.
- Floor Deny - This procedure is used by the network to reject a Floor Request from a participant.
- Floor Taken - This procedure is used by the network to inform the requesting participant that a Floor Request from another participant has succeeded and the floor is not available any more.
For the sake of simplicity, the detailed description of main procedures is referred to one-to-one sessions only, the extension to many-to-many sessions is immediate. For every procedure an RTCP APP packet has been implemented as defined by OMA. The detailed description of the RTCP APP packets is in **APPENDIX A.** The Floor Control functionality interacts with:
- the user terminal (UE) through relevant RTCP/RTP packets;
- the Session Manager functionality (PTW SM) through an internal protocol based on packet exchange over TCP. The detailed description of the exchanged packets is provided in **APPENDIX B.**

In **fig.10,** the message sequence chart of the "Floor Idle Indication" procedure is shown. With reference to **fig.10,** following the initial SIP session setup of UE#1 with UE#2, MCDF will send a Floor Idle message to UE#1 and UE#2 and will wait for the first Floor Request message.

In **fig.11,** the message sequence chart of the "Floor Request with Idle floor" procedure is shown. With reference to **fig.11**, the initial conditions are that the Floor is in the idle state, with no users currently owning the media stream. The procedure includes the following steps:
- Step 1 - The UE#1 sends Floor Request message to MCDF.
- Steps 2/3 - MCDF determines that UE#1 may have the floor (the resource is available), and issues Floor Grant and Floor Taken messages in steps 2 and 3. The Floor Taken message contains the sender identification of the user that has been granted the resource (in this case, User #1). The Floor Request is sent periodically by UE#1 until a Floor Grant response is received by UE#1 and this is managed by the floor request timer.
- Step 4 - The sender identification of the granted user is provided to the receiving party, and is provided to the UE#2 user.
- Step 5 - A Media Proceed Notification is provided to the UE#1, and the user UE#1 may begin sending.

In **fig.12,** the message sequence chart of the "Floor Request with already granted floor" procedure is shown. With reference to **fig.12,** the floor is already granted to a user on the call. A user (UE#2) attempts to request the floor that is already allocated. UE#2 may also be receiving RTP stream while making the request. The procedure includes the following steps:
- Step 1 - The user UE#2 presses a button to request the floor.
- Step 2 - The UE#2 client makes a Floor Request for the floor to the MCDF.
- Step 3 - MCDF denies this request via a Floor Deny response (the Floor Request is periodically sent until a Floor Deny or Floor Taken or RTP media packet response is received by UE#2 and this is managed by the floor request timer).
- Step 4 - The UE#2 provides a floor request denied notification back to the user.

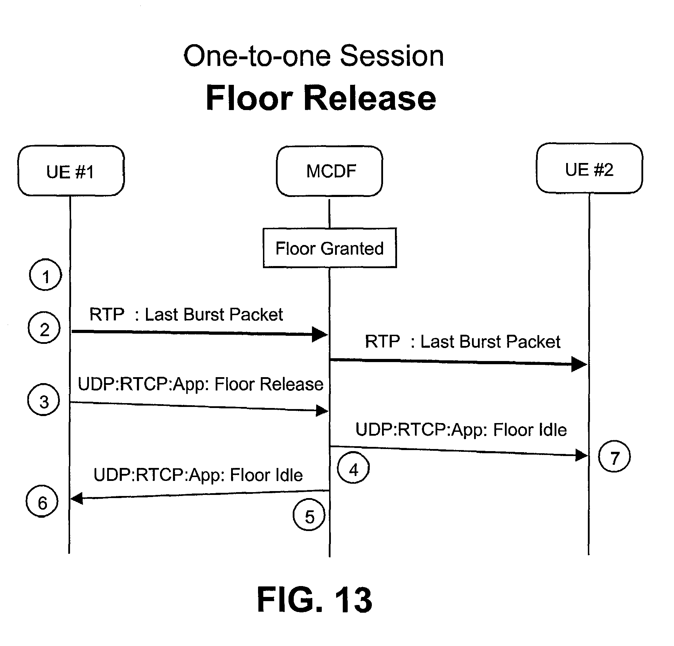

In **fig.13,** the message sequence chart of the "Floor Release" procedure is shown. With reference to **fig.13,** the procedure includes the following steps:
- Step 1 - The user UE#1 stops sending.
- Step 2 - The user UE#1 stops the encoding of media and determines the sequence number of the last RTP packet in the media burst that where produced.
- Step 3 - The user UE#1 signals to the MCDF that it is releasing the floor via the Floor Release message.
- Steps 4/5 - The MCDF indicates to both the users UE#1 and UE#2 that the floor is idle. The user UE#1 uses the Floor Idle message as an acknowledgement to the Floor Release message sent previously. The user UE#2 client provides a Floor Idle Notification to the user UE#1. The Floor Release message is sent periodically by UE#1 to the MCDF until UE#1 receives a Floor Idle message (the floor release timer is described).
- Steps 6/7 - The UE clients notify the users that the floor is now open.
If UE#1 doesn't have the floor, MCDF will reply with a Floor Taken message.

For completeness, also a glance at the "Flow Control" functionality to be included in the future in the MCDF is reported. Flow control functionality allows to perform the low level data flow control according with RTP/RTCP protocol specification. Some of the tasks performed from the flow control are:
- traffic monitor;
- quality feedback information (QoS);
- charging report (optionally performed by SR and SS packets;
- media mixed management (presently performed by the client).

The third functionality embedded in the MCDF block (fig.5) is Audio/Video Duplication depicted in **fig.7** for one-to-one section only. This is a User Plane functionality and allows to duplicate the incoming audio/video data from the user that has the grant to send data to other users belonging to the same session. This is the key function for the Many-to-Many scenario (not represented in the figure). The scenarios are the same detailed in the description of **fig.7,** simply consider two or more users at the right end, i.e. UE#2, UE#3, UE#4 ..., etc. The audio/video flow coming from one of the user will be duplicated by the MCDF to all the other participants to the PTW session.

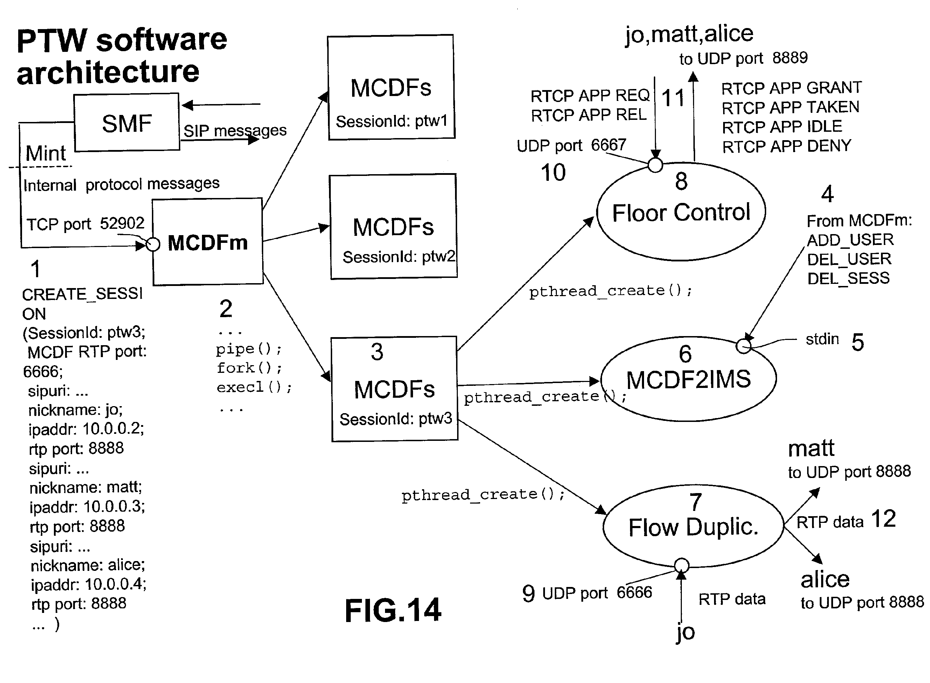

**Fig.14** shows a diagrammatic representation of the software architecture for implementing the PTW service in compliance with the systemistic requirements established in **fig.2** and **figures 6** to **9.** More precisely:
- the PTW SM module needs a way to communicate with the MCDF part;
- there must be a single point of communication between PTW SM and MCDF to minimize complexity;
- processes that manage PTW sessions must be dynamically created in a number limited only by machine resources.

With reference to **fig.14,** to satisfy the previous requirements, the following solutions has been adopted:
- there is an internal interface between PTW SM and MCDF: the format of the used packets is detailed in **APPENDIX B;**
- the PTW SM includes a protocol conversion module SMF to convert messages from SIP to an internal protocol;
- MCDF is split in two parts, MCDFm (master) and MCDFs (slave) that reside on the same machine;
- there is only one MCDFm process always active in single instance that communicate with the PTW SM module through the internal interface;
- MCDFm starts MCDFs processes on demand, one MCDF for each PTW session; once the MCDFs slave processes are set up, they works in parallel among each other.
The main tasks of MCDFm are:
- communicate with PTW SM through packets detailed in **APPENDIX B;**
- start MCDFs processes (one for each PTW session);
- communicate PTW session information coming from PTW SM to the managing MCDFs process.

In operation, the MCDFm master process listens on a TCP port 52902 for messages from the SMF conversion block. When MCDFm receives a CREATE_SESSION message (label 1), it forks (label 2) instances of a new MCDFs process (label 3) and instructs it with the initial PTW session configuration; it then adds the association between the new PTW session and the new created MCDFs instances in an internal volatile database, so that it can communicate subsequent variations in the PTW session configuration, such as: addition or deletion of participants, ending of the PTW session (label 4). From now on, MCDFm and MCDFs will communicate by messages through a pipe connection stdin (label 5). The format of the messages is the same as in **APPENDIX B:** MCDFm simply forward them to the MCDFs, acting as a "switch". When MCDFm receives a ADD_USER or DELETE_USER message, it finds the MCDFs associated to that PTW session and sends the same message (label 4) through the corresponding pipe (label 5). When MCDFm receives a DEL_SESSION message, it finds the associated MCDFs, sends the same message (label 4) through the corresponding pipe (label 5) and then delete the association from its internal database.

MCDFs is the process launched by MCDFm, there is one MCDFs for each PTW session. The main tasks of MCDFs process are:
- listen to messages from MCDFm and act upon;
- listen to RTCP floor control messages and act upon as described in the relevant **figures 10** to **13;**
- listen to RTP packets from the talking source and replicate them to the other participants.

MCDFs code is based on POSIX "threads". A thread is defined as an independent stream of instructions that can be scheduled to run as such by the operating system. There is a thread for each of the previous tasks. This delegates scheduling and resources allocation to the kernel and can also be an advantage on a multiprocessor machine, which might assume the tree configuration of CPUs as the functional blocks of **fig.14.** MCDFs is started with, as parameter, the UDP port to which the RTP data flow will be sent by PTW session participants. There is only one port (UDP port 6666) to which all the participants send their RTP data. This port is communicated to the MCDFm process by the PTW SM module in the CREATE_SESSION message (label 1). When MCDFs starts, it reads on stdin (label 5) (its end of the pipe with MCDFm) the initial configuration of the PTW session contained in the CREATE_SESSION message (label 1). It then launches the threads that perform its tasks. A first thread named MCDF2IMS (label 6) waits for PTW session configuration data on stdin coming from MCDFm (labels 4 and 5). When it receives an ADD_USER or DELETE_USER message, it updates its internal volatile database of PTW session participants. When it receives a DEL_SESSION message, it simply updates a global variable. The update of the global variable causes the death of the MCDFs process. A second thread named Flow Duplication (label 7) waits on RTP port 6666 (label 9) for RTP packets; this is the same MCDF RTP port indicated in the CREATE_SESSION message (label 1). It recognizes the source ip address of every packet and re-sends it to all the other participants at UDP port 8888 (label 12). In order to improve performances, a little trick has been implemented: when the first RTP packet is received, an internal list of all the addresses except its source address is constructed; at every subsequent packet reception, a check is performed on the source address and if it's the same of the previous packet the same address list will be used to re-send it, otherwise the list is recalculated. A third and last thread named Floor Control (label 8) waits on RTCP port 6667 (RTP port + 1) (label 10) for RTCP APP packets (label 11). The format of the RTCP packets is described in **APPENDIX A,** while the floor control mechanism they implement is described with reference to the **figures 10** to **13.**

The above description of the MCDFs process at label 3 split into subcomponent processes at the labels 6, 7, and 8 is valid for each running session (not indicated in **fig.14),** with the only exception of indicating different addresses of the UDP ports for each instituted MCDFs process.

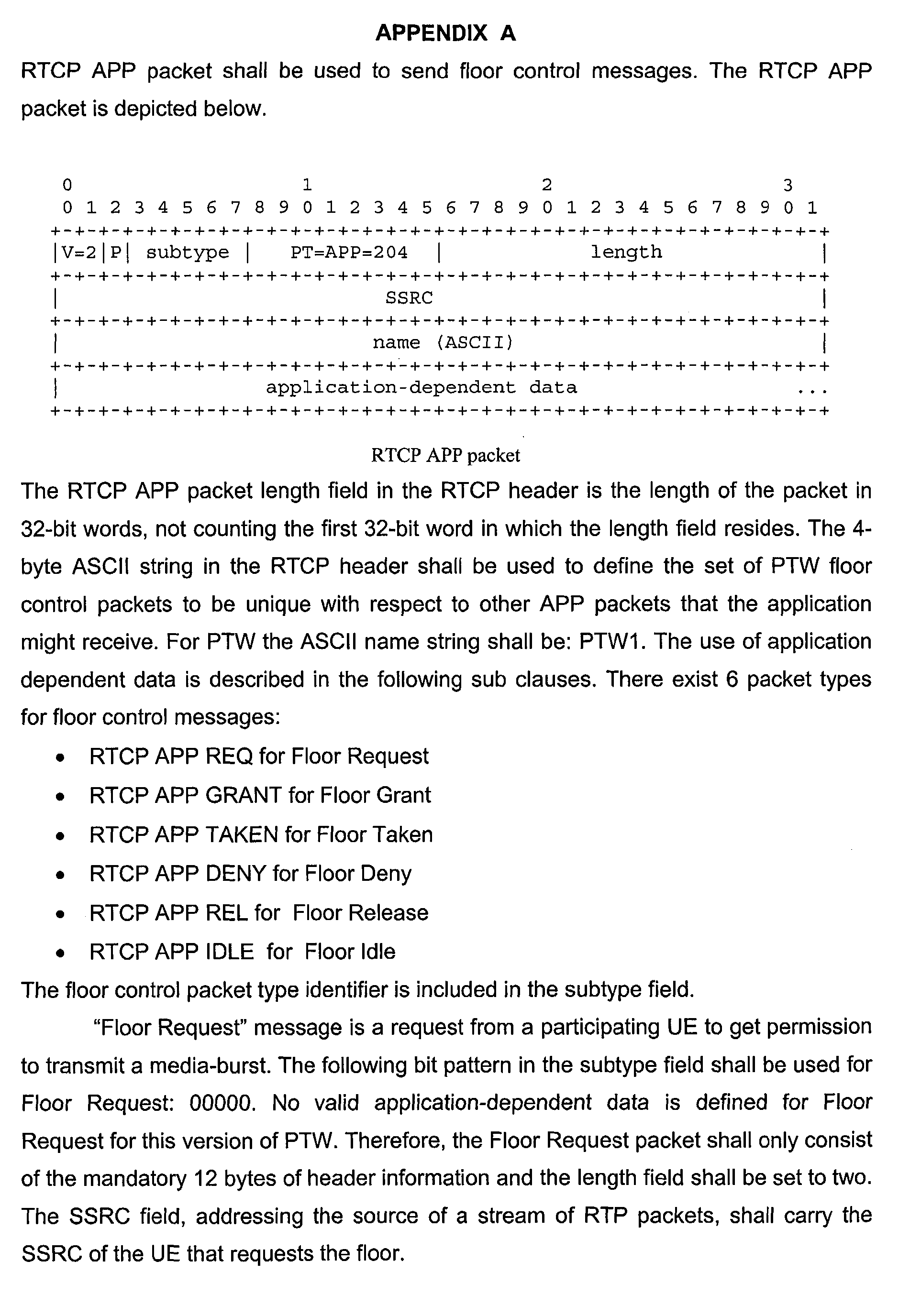

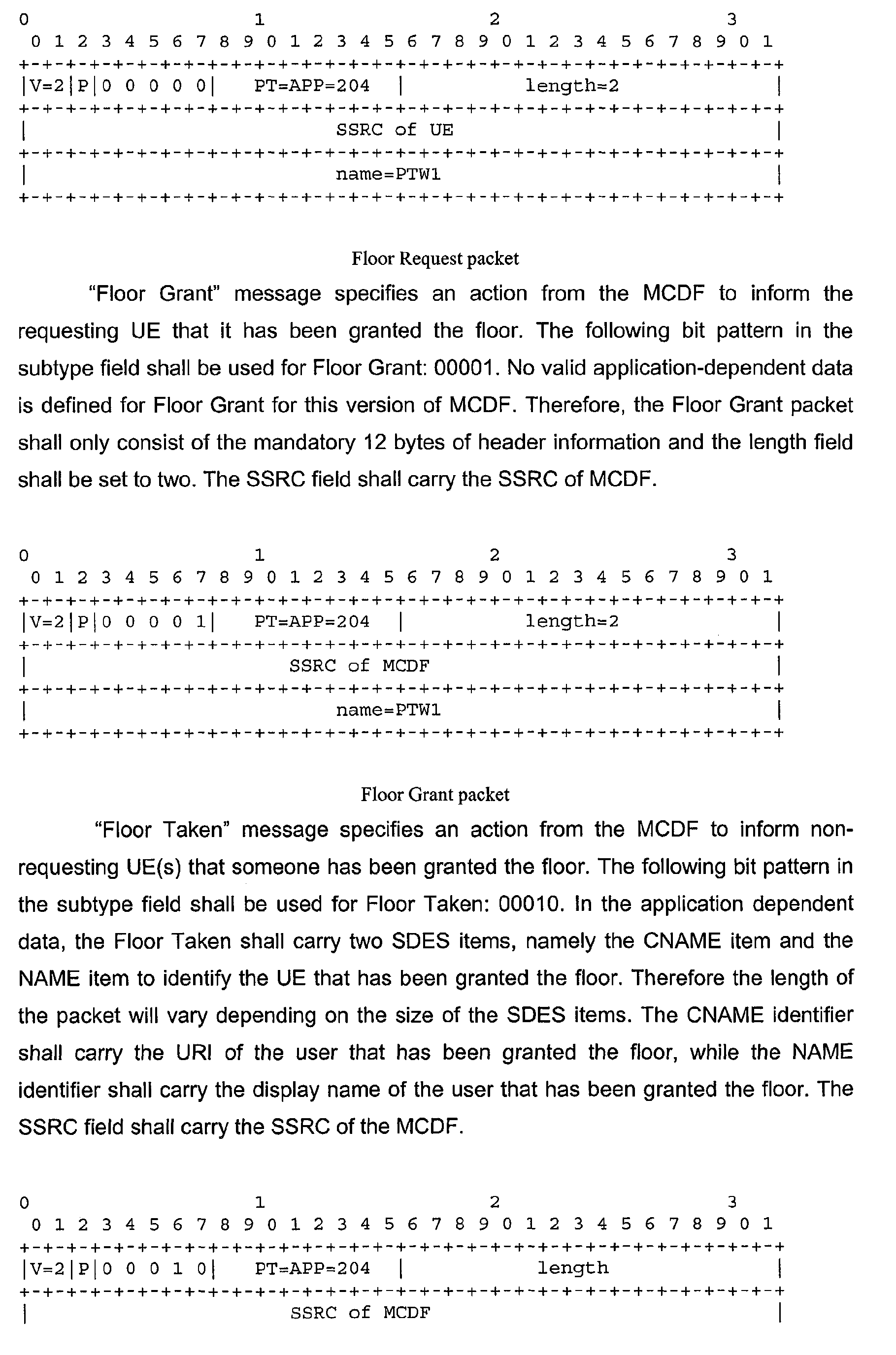

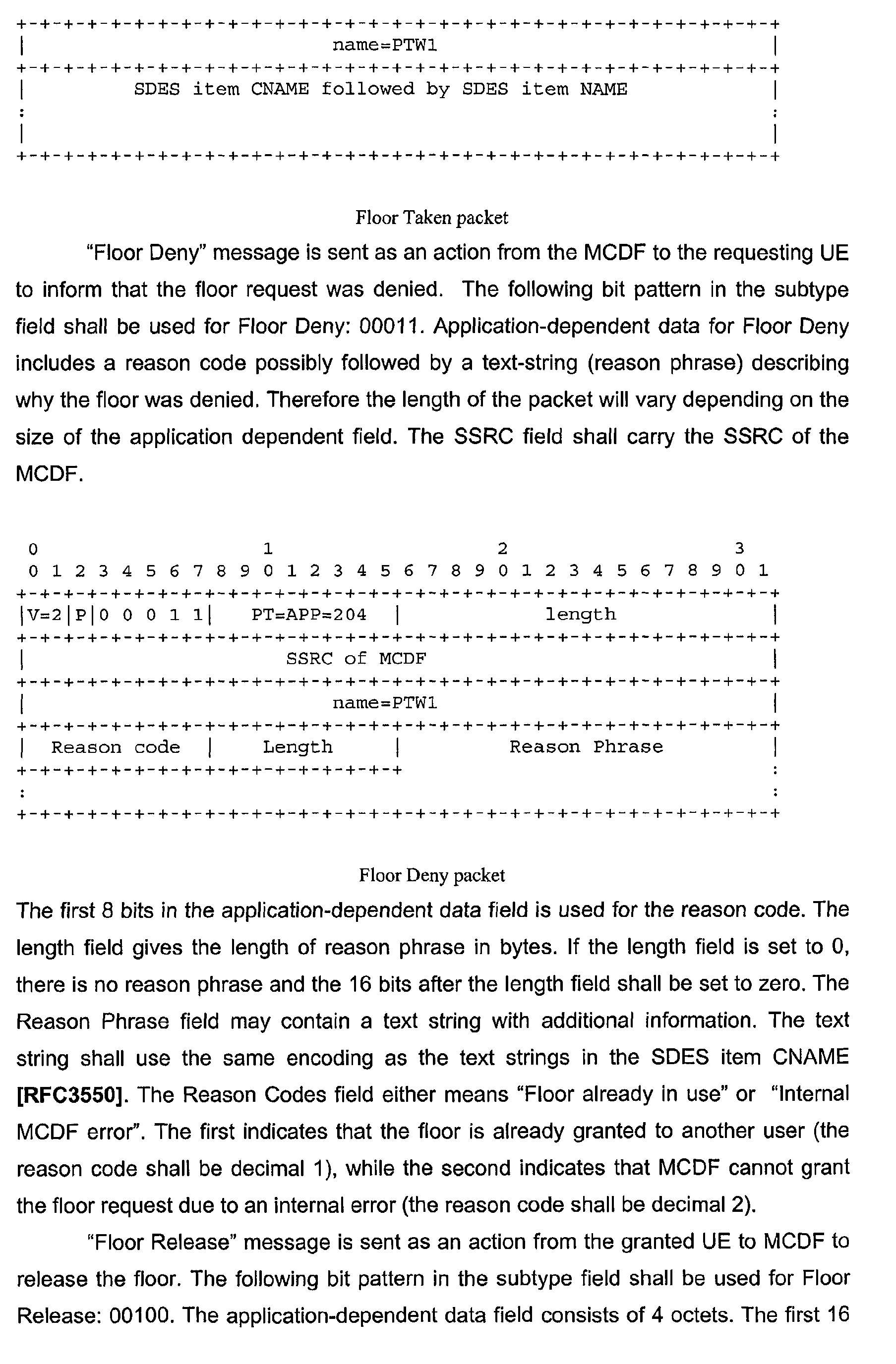

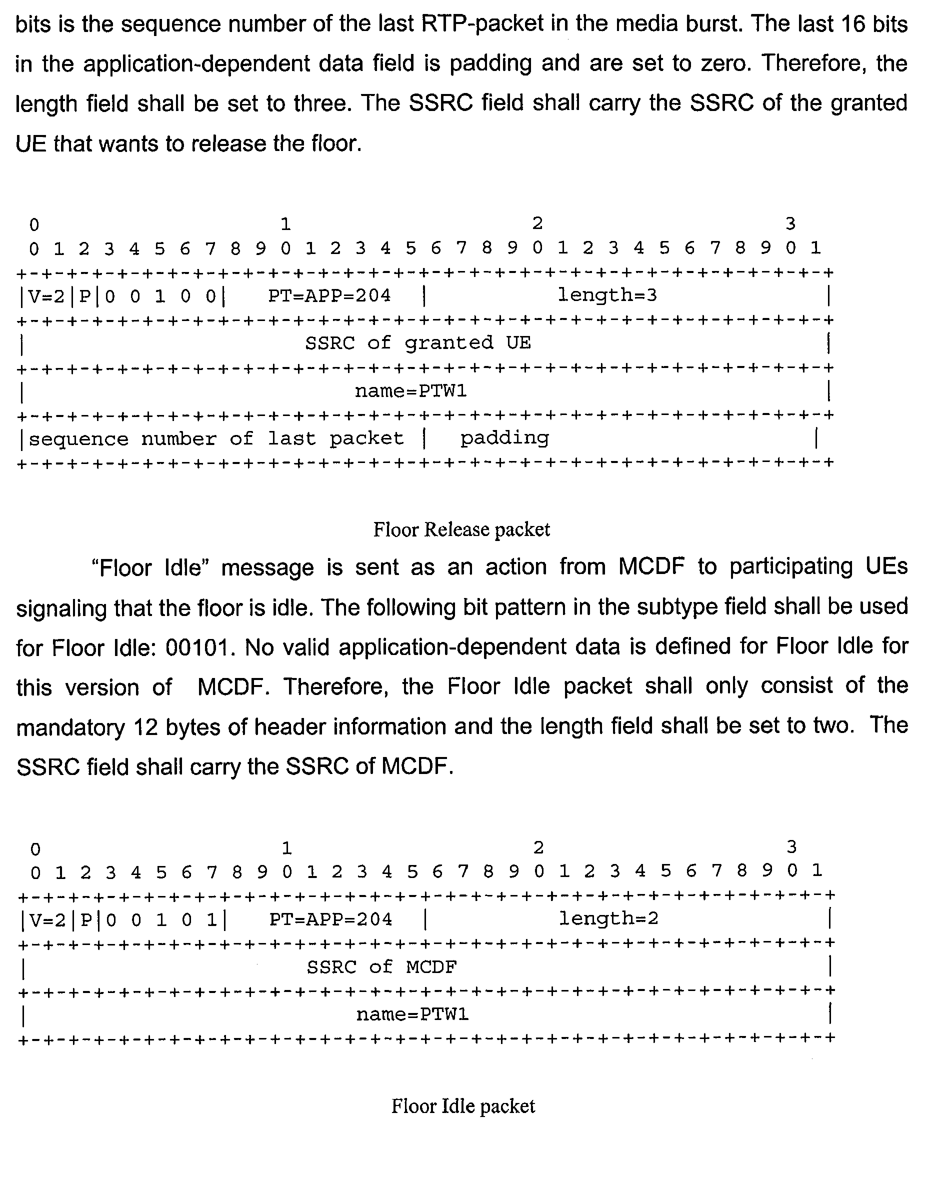

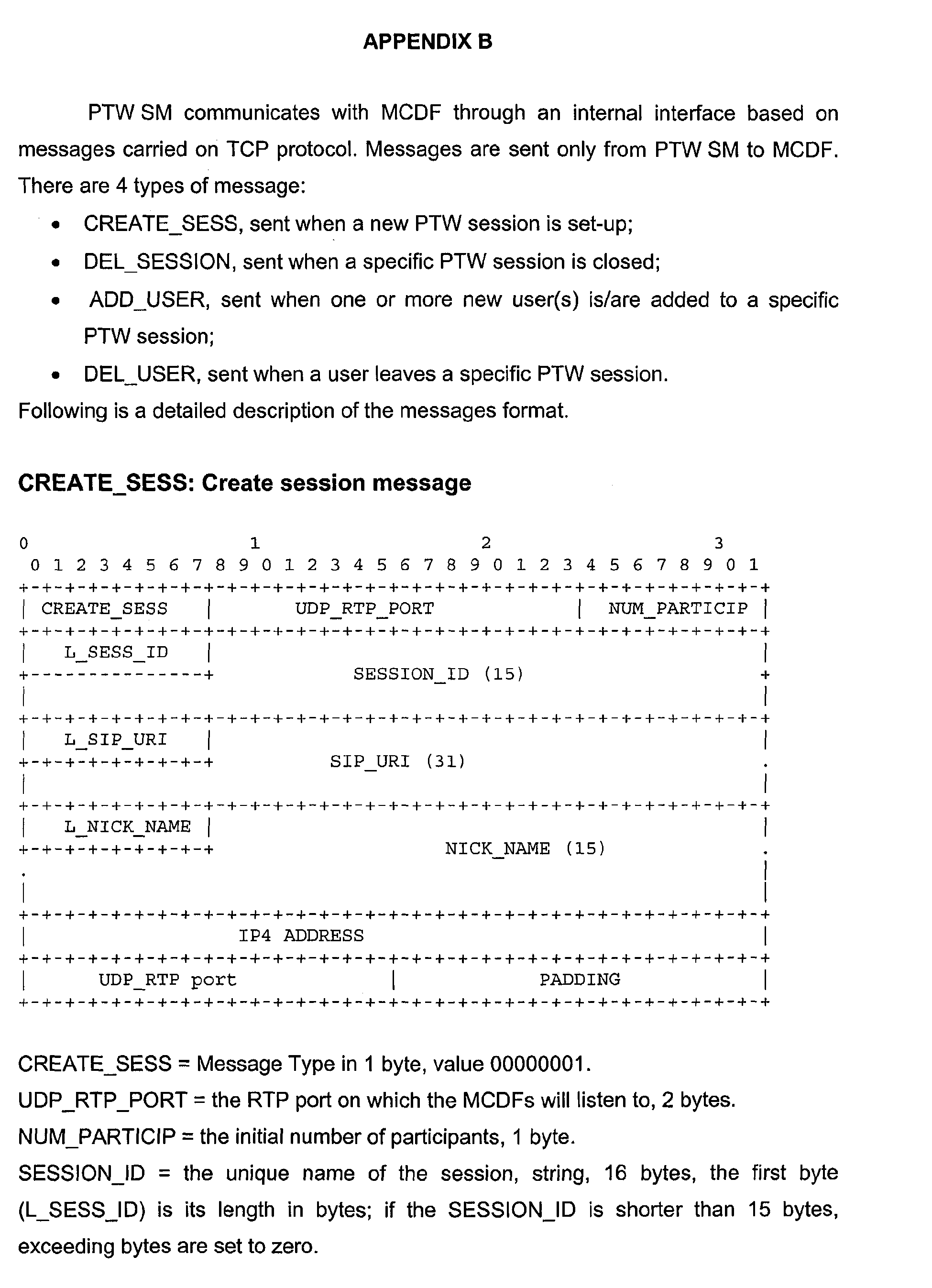

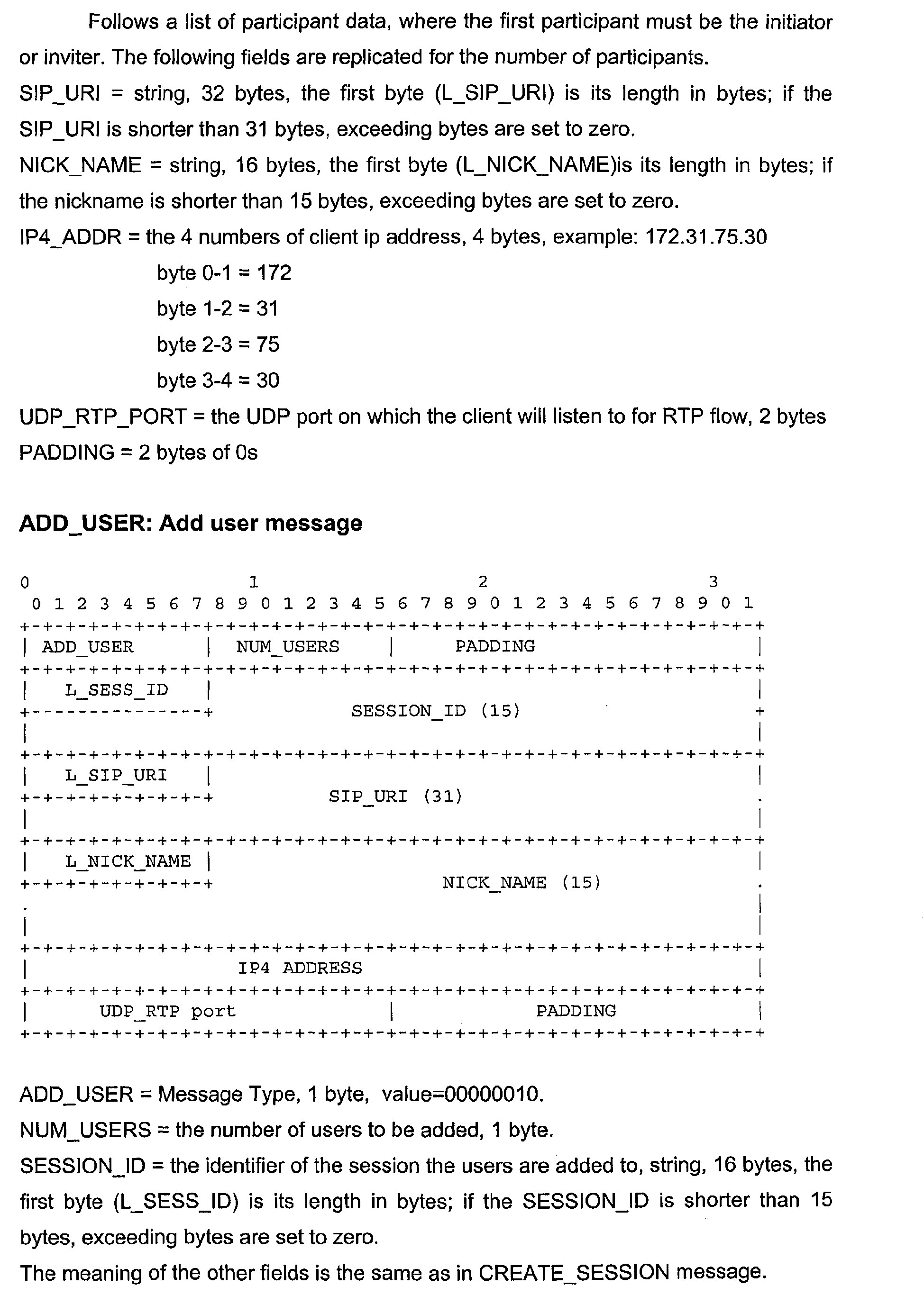

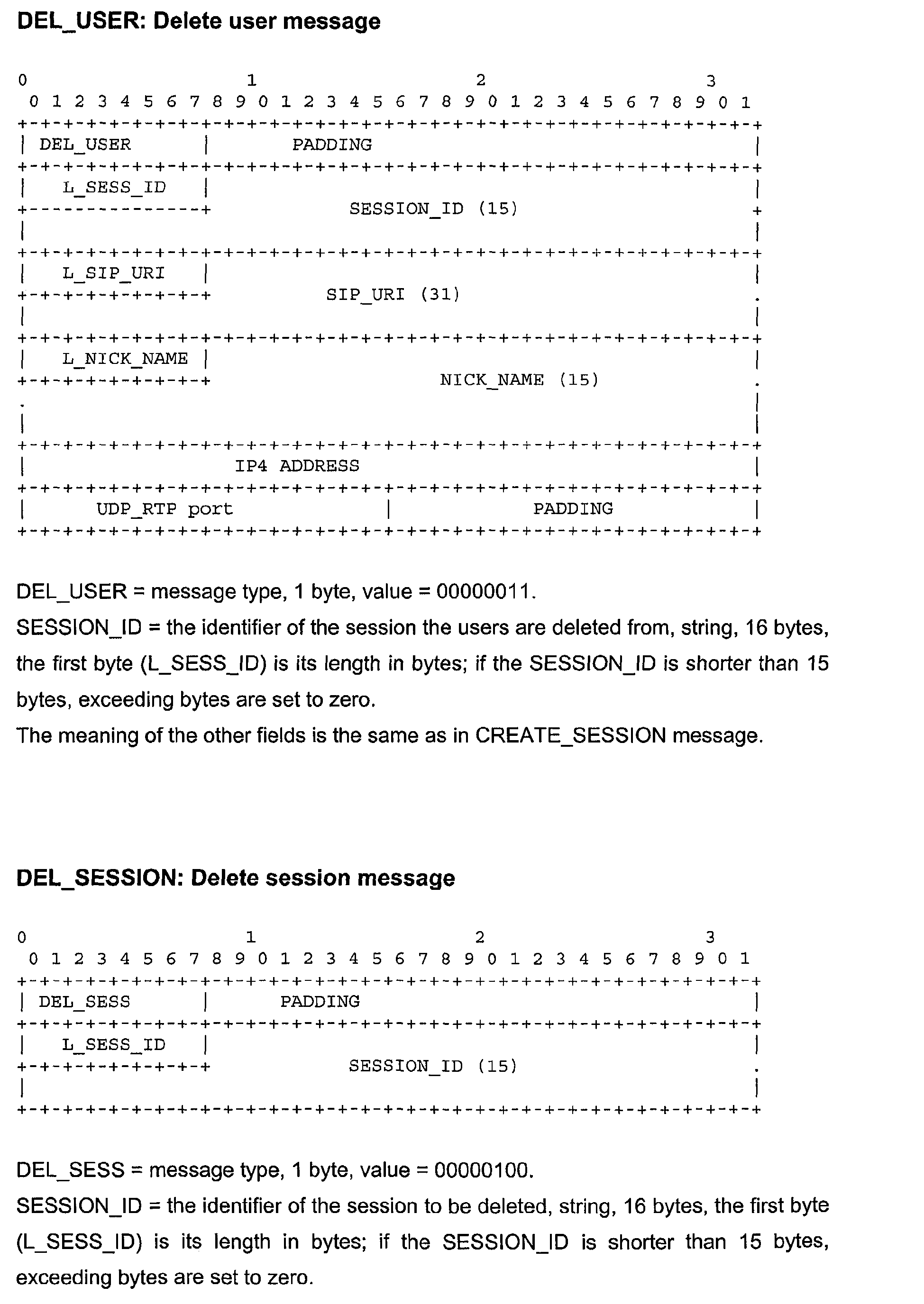

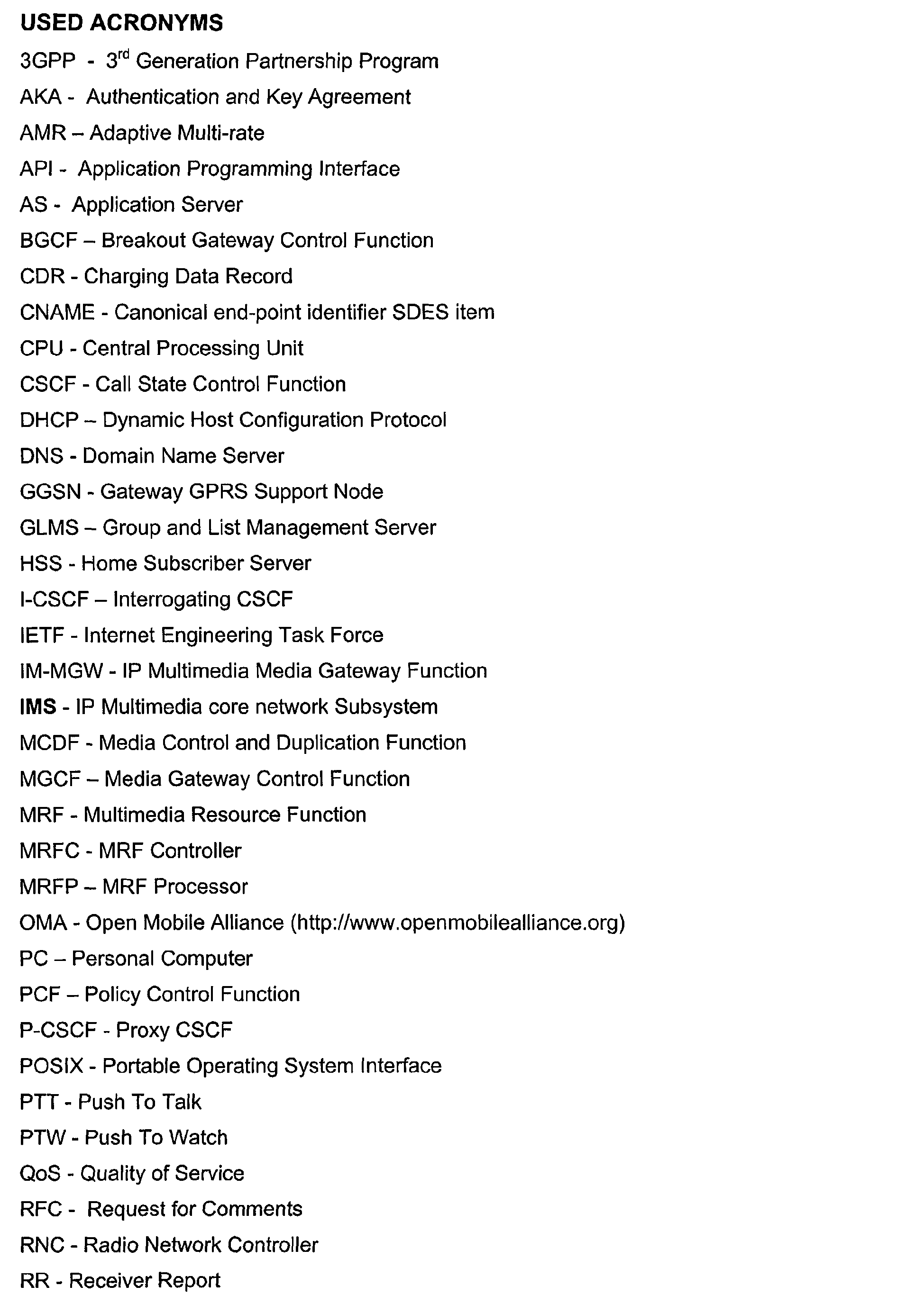

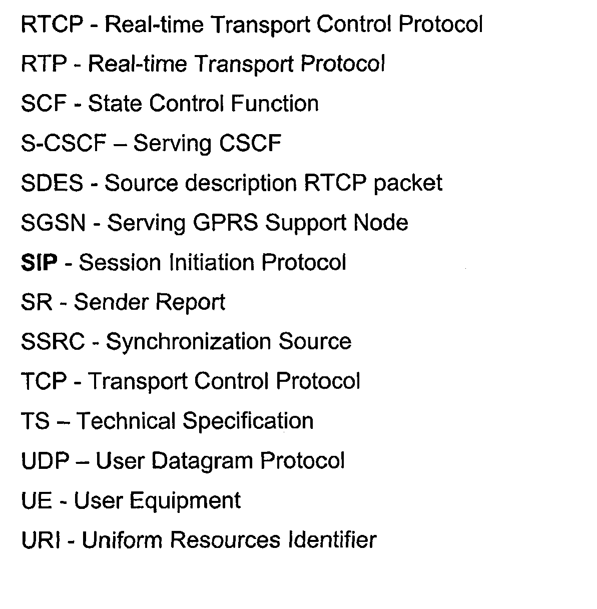

### REFERENCES

- [3GPP_NetArch]: 3GPP TS 23.002 V 6.1.0 , "Network Architecture, Release 5", (June 2003).
- [3GPP_ServReq]: 3GPP TS 22.228 V 6.5.0, "Service requirements for the Internet Protocol (IP) multimedia core network subsystem"; Stage 1, Release 6", (January 2004).
- [3GPP_IMS]: 3GPP TS 23.228 V 6.5.0, "IP Multimedia Subsystem (IMS), Release 6", (March 2004).
- [PoC_User]: Push-to-Talk over Cellular (PoC) User Plane Transport Protocols; PoC Release 1.1.0 (August 2003).
- [PoC_Arch]: Push-to-Talk over Cellular (PoC): Architecture 1.1.0 (August 2003).
- [PoC_Sign]: Push-to-Talk over Cellular (PoC) Signalling Flow: Poc Release 1.1.3 (August 2003).
- [RFC3261]: IETF RFC 3261 "Sip Initiator Protocol", June 2002.
- [RFC0793]: IETF RFC 0793 or STD 0007, "Transmission Control Protocol", J. Postel, Sept. 01 1981
- [RFC0768]: IETF RFC 0768 or STD 0006, "User Datagram Protocol", J. Postel, Aug. 28 1980
- [RFC3550]: IETF RFC 3550, "RTP: A Transport Protocol for Real-Time Applications", H. Schulzrinne, S. Casner, R. Frederick, V. Jacobson, July 2003.

## Claims

1. A network element cooperating with an IMS control network for implementing Push services with users of a packet switched wireless network (UMTS, WLAN) connected to the IMS control network via an IP router (1), **characterized in that** includes:
- first processing means (PTW SM, SMF) interfaced (Mr) to an IP server (CSCF) of IMS for receiving/transmitting SIP signalling messages and converting the incoming ones into messages of an internal protocol accessible at an internal interface (Mint) for creating, updating, deleting the Push sessions;
- second processing means (MCDF) connected to the internal interface (Mint) to receive the internal protocol messages and acting upon on each indicated session;
- floor control means (FCF) interfaced (Gi) at User Plane to the participants of each Push sessions (UA, UB, UC, UD) for receiving/transmitting a floor control signalling (RTCP) aimed to grant the multimedia transmission from one participant at a time inside a session;
- packet duplication means (AVD) interfaced (Gi) at User Plane to the participants of each Push session for receiving real-time multimedia packets (RTP), such as audio-video, from the granted participant (UA) and duplicating and sending them to the other participants the session (UB, UC, UD).

2. The network element of the preceding claim, **characterized in that** said first processing means (PTW SM, SMF), second processing means (MCDF), floor control means (FCF), and packet duplication means (AVD) are implemented with a single processor.

3. The network element of claim 1, **characterized in that** said first processing means (PTW SM, SMF), second processing means (MCDF), floor control means (FCF), and packet duplication means (AVD) are implemented with a multiprocessor architecture having a master processor corresponding to the first processing means (PTW SM, SMF) and one or more slave processors corresponding to the other means (MCDF, FCF, AVD).

4. The network element of any preceding claims, **characterized in that** the 3GPP-IMS Mr standard interface is defined between the first processing means (PTW SM, SMF) and the IP server (CSCF).

5. The network element of any preceding claims, **characterized in that** the 3GPP-IMS Gi standard interface is defined between the second processing means (MCDF) and the participants of the Push sessions (UA, UB, UC, UD).

6. A software architecture comprising a plurality of processes running on processing means of a network element cooperating with an IMS control network for implementing Push services with users of a packet switched wireless network (UMTS, WLAN) connected to the IMS control network via an IP router (1), **characterized in that** includes:
- a conversion process (SMF) for converting incoming SIP messages at Control Plane into messages of an internal protocol aimed to create, or update, or delete Push sessions according to the SIP message contents;
- a master process (MCDFm) which institutes a new slave process (MCDFs) associated to a respective session upon a create session command (CREATE_SESSION) transmitted by the internal protocol, assigning the needed resources and indicating the input (6666, 6667) and output (8888, 8889) ports requested by a transport protocol (UDP) used to convey floor signalling (RTCP) and payload data (RTP) at User Plane from/to the participants (UA, UB, UC, UD) the session;
- each slave process (MCDFs) acts upon said internal protocol to update or delete the relevant session;
- each slave process (MCDFs) acts upon said floor control signalling (RTCP) for receiving real-time multimedia packets (RTP), such as audio-video, from the granted participant (UA) and duplicating and sending them to the other participants the session (UB, UC, UD).

7. The software architecture of the preceding claim, **characterized in that** all instituted slave processes (MCDFs) works in parallel, each one being split into three subcomponent processes (6, 7, 8):
- a first one (MCD2IMS) being dedicated to execute commands (ADD_USER, DEL_USER, DEL_SESS) embedded into messages transferred from said internal protocol;
- a second one (Floor Control) being dedicated to manage the floor control signalling (RTCP) messages (RTCP APP REQ, RTCP APP GRANT, RTCP APP TAKEN, RTCP APP DENY, RTCP APP REL, RTCP APP IDLE);
- a third one (Flow Duplic.) being dedicated to the duplication of multimedia real-time data (RTP).

8. The software architecture of any claims from 6 , **characterized in that** each time the master process (MCDFm) institutes a new slave process (MCDFs), information on the initial parameters of the session configuration and the association between the new session and the new created instances of the slave process (MCDFs) are transferred in an internal volatile database, so that the master process can communicate subsequent variations in the session configuration.

9. The software architecture of any claims from 6 , **characterized in that** said transport protocol used to convey floor signalling (RTCP) and payload data (RTP) at User Plane is UDP.

10. The software architecture of any claims from 6, **characterized in that** said floor control signalling is based on RTCP protocol.

11. The software architecture of any claims from 6 , **characterized in that** said real-time multimedia packets are assembled according to the RTP protocol.

12. The software architecture of any claims from 6 , **characterized in that** the messages of said internal protocol are transported by the TCP protocol.
